# EUROPÄISCHE PATENTANMELDUNG

(11) **EP 0 611 643 A1**
(43) Veröffentlichungstag der Anmeldung: **24.08.1994**
(21) Anmeldenummer: 93102438.4
(22) Anmeldetag: 17.02.1993
(51) Int. Cl.: B29C 65/02, B29C 65/74

(54) **Verfahren zur Herstellung punktueller oder kleinflächiger Schweissverbindungen zwischen wenigstens zwei zumindest im Schweissbereich aneinander anliegenden oder angenäherten Lagen thermoplastischer Kunststoffe**

(71) Anmelder: 2H KUNSTSTOFF GmbH, D-48607 Ochtrup (DE)
(72) Erfinder: Hewing, Bernd, W-4434 Ochtrup (DE); Broda, Siegfried, W-4358 Haltern (DE)
(74) Vertreter: Schulze Horn, Stefan, Dipl.-Ing. M.Sc.

(57) **Zusammenfassung**

Die Erfindung betrifft ein Verfahren zur Herstellung punktueller oder kleinflächiger Schweißverbindungen zwischen wenigstens zwei zumindest im Schweißbereich aneinander anliegenden oder angenäherten Lagen (11,12) thermoplastischer Kunststoffe, wobei die Lagen (11, 12) punktuell oder kleinflächig durch Wärmezufuhr auf die Schmelztemperatur des Kunststoffes erhitzt werden.

Das neue Verfahren ist dadurch gekennzeichnet, daß die Lagen (11, 12) in dem erhitzten Bereich durch Krafteinwirkung unter Ausbildung einer Durchbrechung (14) zu mindestens einem Schmelzewulst (13) umgeformt und abgekühlt werden.

Weiterhin betrifft die Erfindung eine Vorrichtung zur Herstellung punktueller oder kleinflächiger Schweißverbindungen zwischen wenigstens zwei zumindest im Schweißbereich aneinander anliegenden oder angenäherten Lagen (11, 12) thermoplastischer Kunststoffe, wobei die Vorrichtung wenigstens eine Wärmequelle aufweist, mit der die Lagen (11, 12) punktuell oder kleinflächig auf die Schmelztemperatur des Kunststoffes erhitzbar sind.

Die neue Vorrichtung ist dadurch gekennzeichnet, daß die Vorrichtung Mittel zur Umformung der Lagen (11, 12) in dem erhitzten Bereich durch Krafteinwirkung unter Ausbildung einer Durchbrechung (14) zu mindestens einem Schmelzewulst (13) aufweist.

## Beschreibung

Die Erfindung betrifft ein Verfahren der im Oberbegriff des Patentanspruchs 1 angegebenen Art. Weiterhin betrifft die Erfindung eine Vorrichtung der im Oberbegriff des Patentanspruchs 10 angegebenen Art.

Aus DE-U-88 11 427 ist es bekannt, bei der Herstellung eines Rieselpaneels aus mehreren aufeinander befestigten Rieselwänden aus thermoplastischer Kunststoffolie die einzelnen Rieselwände miteinander durch Verschweißung zu verbinden. Hierzu besitzen die einzelnen Rieselwände Befestigungselemente und Zentrierelemente in Form von kleinen Hohlsäulen oder Hohlkegeln, die sich bei aufeinanderliegenden Rieselwänden fingerhutartig überstülpen. Durch einen Schweißvorgang werden die aufeinanderliegenden Befestigungselemente zweier benachbarter Rieselwände um wenigstens 10 % von ihrer ursprünglichen Höhe im Schmelzzustand zusammengeschoben und bilden anschließend einen abgeflachten Kegel mit einer verschmolzenen Spitze. Nach Auflegen einer weiteren Rieselwand wiederholt sich dieser Schweißvorgang, bis letztendlich ein blockförmiges Rieselpaneel aus einer Anzahl von Rieselwänden hergestellt ist.

Als nachteilig ist hierbei anzusehen, daß bei jedem Schweißvorgang immer nur eine einzelne Rieselwand angeschweißt werden kann. Bei Rieselpaneelen oder auch anderen Bauteilen, die aus einer relativ großen Zahl von einzelnen, miteinander zu verschweißenden Kunststoffteilen bestehen, ist die Herstellung zeitaufwendig und damit teuer.

Aus DE-A-41 11 846 ist ein kontinuierliches Verfahren zur Herstellung von Waben-Stützkonstruktionen durch Thermobondieren einer Vielzahl von thermoplastischen Flächenkörpern bzw. Folien bekannt. Dabei werden gewellte thermoplastische Flächenkörper nacheinander zugeführt, ausgerichtet, gehaltert und bondiert unter Aufbau einer Wabenkonstruktion mit den gewünschten Abmessungen. Das Bondieren erfolgt durch Impulserwärmen über zurückziehbare Stütz- bzw. Heizstäbe im Zusammenwirken mit einer beweglichen Heiz-/Kühlplatte, wobei zwischen den Stäben und der Platte Paare von zu bondierenden Flächenkörpern schrittweise nacheinander bewegt werden, so daß jedesmal ein Flächenkörper mit dem zuletzt bondierten Flächenkörper unter Aufbau der Vielflächenkörper-Wabenkonstruktion thermobondiert wird.

Auch bei diesem bekannten Verfahren wird als nachteilig angesehen, daß die Flächenkörper nacheinander einzeln zugeführt, ausgerichtet, gehaltert und bondiert werden müssen. Auch hier ist also der Verfahrensablauf zeitaufwendig, wodurch die Herstellung von Produkten nach diesem Verfahren aufwendig und teuer wird.

Beide bekannten Verfahren weisen zudem den Nachteil auf, daß es relativ leicht zu Fehlschweißungen kommt, die keine dauerhafte Verbindung zwischen den benachbarten Kunststofflagen herstellen, da bei dem zuerst beschriebenen Verfahren das Verschweißen ohne Gegenhalter nur gegen die unterliegende Kunststofflage erfolgt und bei dem als zweites beschriebenen Verfahren das genaue Positionieren einer Vielzahl von Stütz- bzw. Heizstäben relativ zu einer einzelnen in sich starren, auf und ab beweglichen Heiz-/Kühlplatte zwangsläufig sehr aufwendig und in der Praxis kaum mit der erforderlichen Genauigkeit durchführbar ist. Außerdem benötigen beide Verfahren für ein ordnungsgemäßes Funktionieren eine sehr formtreue Ausbildung und exakte Positionierung der miteinander zu verschweißenden Kunststoffteile. Insbesondere bei großflächigen Kunststoffteilen ist die erforderliche Formtreue häufig nur sehr schwer oder praktisch nicht wirtschaftlich erreichbar.

Es stellt sich daher die Aufgabe, ein Verfahren der eingangs genannten Art zu schaffen, das schnell und unproblematisch ausführbar ist, das geringere Anforderungen an die Formtreue der zu verschweißenden Teile stellt und mit dem zuverlässige Schweißverbindungen herstellbar sind. Weiterhin soll eine Vorrichtung der eingangs genannten Art geschaffen werden, mit der das eingangs genannte Verfahren technisch zuverlässig durchführbar ist.

Die Lösung der erstgenannten Aufgabe gelingt erfindungsgemäß durch ein Verfahren der eingangs angegebenen Art, welches dadurch gekennzeichnet ist, daß die Lagen in dem erhitzten Bereich durch Krafteinwirkung unter Ausbildung einer Durchbrechung zu mindestens einem Schmelzewulst umgeformt und abgekühlt werden.

Mit dem neuen Verfahren wird vorteilhaft erreicht, daß im Bereich des entstehenden Schmelzewulstes eine Materialkonzentration erzeugt wird, die, weil sie im schmelzflüssigen Zustand des Kunststoffes herbeigeführt wird, zu einer Einstückigkeit des Schmelzewulstes führt. Das für die Materialkonzentration zu dem Schmelzewulst benötigte zusätzliche Kunststoffmaterial wird unmittelbar aus dem Bereich gewonnen, der nach Abschluß des Schweißvorganges als Durchbrechung in den Lagen verbleibt. Eine Zuführung von zusätzlichem Kunststoffmaterial ist also nicht erforderlich. Der nach dem erfindungsgemäßen Verfahren erzeugt Schmelzewulst bildet eine zuverlässige und hoch belastbare punktuelle oder kleinflächige Schweißverbindung zwischen den zumindest im Schweißbereich aneinander anliegenden oder angenäherten Kunststofflagen, wobei die Zahl der Lagen nicht auf zwei begrenzt ist.

Hinsichtlich der Krafteinwirkung ist bevorzugt vorgesehen, daß diese mechanisch und/oder durch eine Oberflächenspannung des Kunststoffes und/oder durch Schwerkraft und/oder durch Fliehkraft und/oder durch Gasdruck und/oder durch eine Gasströmung aufgebracht wird. Alle diese genannten Arten der Aufbringung der Krafteinwirkung sind technisch relativ einfach realisierbar und dazu geeignet, den auf seine Schmelztemperatur erhitzten Kunststoff zu einem Schmelzewulst umzuformen. Dabei können die genannten Arten der Krafteinwirkungen sowohl einzeln als auch in geeigneter Kombination miteinander angewendet werden.

Weiter ist vorgesehen, daß das Umformen der Lagen im erhitzten Bereich zu dem Schmelzewulst durch Verdrängung von schmelzflüssigem Kunststoff vom Zentrum des erhitzten Bereiches nach außen hin erfolgt. Hierdurch wird eine gleichmäßige Materialkonzentration und damit ein in seiner Materialstärke gleichmäßiger Schmelzewulst erzeugt. Dies trägt zu einer guten Haltbarkeit und Sicherheit der Schweißverbindung bei.

Um eine möglichst hohe Sicherheit der Schweißverbindung gegen von außen angreifende, in Trennungsrichtung wirkende Kräfte zu gewährleisten, ist vorgesehen, daß der Schmelzewulst geschlossen umlaufend geformt wird. Dabei kann die Kontur den zu erwartenden Kräften und deren Angriffsrichtungen angepaßt optimiert werden.

Zur Unterstützung des Zusammenbringens des schmelzflüssigen Materials der beiden Lagen in dem jeweils erhitzten Bereich, insbesondere bei schlecht verschmelzenden Kunststoffen, ist vorgesehen, daß zumindest eine der Lagen während der Herstellung der Schweißverbindung zumindest im erhitzten Bereich in eine mechanische Schwingung versetzt wird.

Diese mechanische Schwingung besitzt bevorzugt eine Freqzenz zwischen 10 und 100 Hz und eine Amplitude zwischen dem 0,1- und 10-fachen der Dicke einer der Lagen, gegebenenfalls der dünnsten Lage.

Hinsichtlich der benötigten Wärmezufuhr zu den Lagen ist bevorzugt vorgesehen, daß diese Wärmezufuhr mittels Wärmeleitung durch Kontakt mit einem wärmeabgebenden Körper und/oder mittels Beaufschlagung mit einer Ultraschallschwingung und/oder durch Bestrahlung mit Wärmestrahlung erfolgen. Auf alle genannten Arten kann die Erhitzung des Kunststoffes auf seine Schmelztemperatur in dem Bereich der vorgesehenen Schweißverbindung technisch problemlos erreicht werden.

Weiter wird vorgeschlagen, daß wenigstens ein Laserstrahl für die Erwärmung der Lagen und die Erzeugung der Durchbrechung verwendet wird. Dabei kann die Verwendung des Laserstrahls als einzige Methode für die Erwärmung der Lagen und für die Erzeugung der Durchbrechung eingesetzt werden. Alternativ kann auch zusätzlich eine der vorangehend beschriebenen Methoden zur Erwärmung der Lagen und/oder zur Erzeugung der Durchbrechung in Kombination mit dem Laserstrahl zur Anwendung kommen.

Für solche Anwendungen des Verfahrens, in denen das Zurückbleiben von Durchbrechungen in den miteinander verschweißten Kunststofflagen nicht erwünscht oder nicht tolerierbar ist, ist vorgesehen, daß die Durchbrechung nachträglich verschlossen wird. Durch das nachträgliche Verschließen wird gewährleistet, daß die Qualität und Haltbarkeit der zuvor erzeugten Schweißverbindung nicht beeinflußt wird. Das Verschließen der Durchbrechungen kann z.B. durch Einziehen eines Füllstückes oder eines endseitig verschließbaren Schlauches erfolgen. Das Füllstück oder der Schlauch können sich dabei auch über mehrere Durchbrechungen hintereinander erstrecken und auch bei entsprechender Stabilität statische Aufgaben, z.B. eines Stützgitters, übernehmen.

Zur Lösung des zweiten Teils der Aufgabe wird erfindungsgemäß eine Vorrichtung zur Herstellung punktueller oder kleinflächiger Schweißverbindungen zwischen wenigstens zwei zumindest im Schweißbereich aneinander anliegenden oder angenäherten Lagen eines thermoplastischen Kunststoffes vorgeschlagen, wobei die Vorrichtung wenigstens eine Wärmequelle aufweist, mit der die Lagen punktuell oder kleinflächig auf die Schmelztemperatur des Kunststoffes erhitzbar sind, welche dadurch gekennzeichnet ist, daß sie Mittel zur Umformung der Lagen in dem erhitzten Bereich durch Krafteinwirkung unter Ausbildung einer Durchbrechung zu mindestens einem Schmelzewulst aufweist.

Mit den Mitteln zur Umformung der Lagen ist die Vorrichtung in der Lage, den auf die Schmelztemperatur des Kunststoffes erhitzten Bereich der aneinander anliegenden Kunststofflagen zu wenigstens einem Schmelzewulst umzuformen, der die gewünschte Schweißverbindung darstellt.

Eine erste Ausgestaltung der Vorrichtung sieht vor, daß sie wenigstens einen bewegbaren Dorn aufweist, der durch den auf die Schmelztemperatur des Kunststoffes erhitzten Bereich der Lagen unter seitlicher Verdrängung von schmelzflüssigem Kunststoff hindurchstoßbar ist. Mit dieser Ausführung der Vorrichtung wird mittels des bewegbaren Dorns bei dessen Durchstoßen der auf Schmelztemperatur erhitzten Kunststofflagen eine Durchbrechung erzeugt, wobei das bei der Durchbrechung verdrängte schmelzflüssige Kunststoffmaterial einen Schmelzewulst bildet, der die gewünschte Schweißverbindung darstellt.

Weiter ist vorgesehen, daß der Dorn als Spitze einer Lanze ausgebildet und am freien Ende eines Lanzenschaftes angeordnet ist. Hierdurch wird erreicht, daß der Dorn bei entsprechend großem Bewegungsweg nacheinander mehrere Schweißverbindungen, die in Axialrichtung der Lanze hintereinanderliegen, erzeugen kann. Hierdurch können Körper, die aus einer Vielzahl von strukturierten, z.B. gewellten, Folien oder Platten oder Spritzteilen bestehen, in einem einzigen Arbeitsgang miteinander verschweißt werden, sofern konstruktiv die einzelnen Teile so ausgebildet werden, daß die vorgesehenen Punkte oder Kontaktflächen der einzelnen Schweißverbindungen jeweils in Flucht zueinander angeordnet sind. Nach Erzeugung der letzten dieser in einem Arbeitsgang schrittweise nacheinander erzeugten mehreren Schweißverbindungen kann die Lanze durch die bei den Schweißvorgängen entstehenden Durchbrechungen ohne weiteres wieder zurückgezogen werden, was eine konstruktiv einfache Ausgestaltung der Vorrichtung erlaubt.

Um die für die Erzeugung der Schweißverbindung benötigte Wärme den miteinander zu verschweißenden Kunststofflagen möglichst einfach zuzuführen, ist vorgesehen, daß der Dorn zumindest an seiner Spitze ein Heizelement und/oder eine Wärmestrahlungsquelle und/oder einen Ultraschallschwinger aufweist. Hierdurch wird erreicht, daß der Dorn sowohl die Zuführung der benötigten Wärme als auch die mechanische Verdrängung und Umformung des erhitzten, schmelzflüssigen Kunststoffes zu dem Schmelzewulst übernimmt. Bei Anordnung des Dorns an einer Lanze wird zweckmäßig eine thermische Trennung zwischen beiden vorgesehen, z.B. durch ein schlecht wärmeleitendes Zwischenstück. Das Heizelement des Dorns kann beispielsweise elektrisch betreibbar sein. Diesem kann eine Temperaturregeleinheit zugeordnet sein, um stets eine materialgerechte Temperatur sicherzustellen. Die Temperatur kann auch noch zeit- und/oder wegabhängig gesteuert werden.

Weiterhin ist bevorzugt vorgesehen, daß der Dorn konisch ist. Diese konische Form sorgt dafür, daß der Verdrängungsvorgang des schmelzflüssigen Kunststoffes beim Hindurchstoßen des Dornes stetig erfolgt, wodurch die gewünschte Ausbildung des Schmelzewulstes in einer gleichmäßigen Form sichergestellt wird.

Bevorzugte Querschnittsformen des Dorns sind im Anspruch 15 angegeben, wobei die kreuz- oder sternförmige oder die flach-messerförmige Querschnittsform den besonderen Vorteil einer großen Umfangslänge und -fläche bei kleiner Querschnittsfläche aufweisen. Dies sorgt insbesondere für eine Übertragung der Wärme in das Kunststoffmaterial über eine große Fläche, wodurch der Wirkungsgrad des Wärmeübergangs verbessert wird. Je nach Material- und Anwendungsbedingungen können jeweils optimale Formen mit unterschiedlichen Konturen und unterschiedlichen Verhältnissen von Umfang zu Fläche eingesetzt werden.

Um ein Mitschleppen von Kunststoffmaterial beim Hindurchstoßen des Dorns und gegebenenfalls der Lanze auszuschließen, ist vorgesehen, daß der Dorn und gegebenenfalls die Lanze aus einem nichthaftenden Material bestehen oder mit einer nichthaftenden Beschichtung versehen sind. Als nichthaftendes Material oder nichthaftende Beschichtung kann beispielsweise Polytetrafluorethylen (PTFE) verwendet werden.

Eine weitere Ausgestaltung der erfindungsgemäßen Vorrichtung sieht vor, daß der maximale Durchmesser des Dorns kleiner als der maximale Durchmesser oder gleich dem maximalen Durchmesser des Lanzenschaftes ist. Hiermit wird insbesondere der Vorteil erzielt, daß nach dem Durchtritt des Dorns durch die miteinander zu verschweißenden Lagen der Lanzenschaft ein weiteres Verdrängen des Kunststoffes zur Wulstbildung bewirken kann, solange das Material noch plastisch ist, ohne daß hier eine besondere Reibung oder Bremsung auftreten kann. Dies ist insbesondere günstig bei der Herstellung von mehreren hintereinander liegenden Schweißverbindungen, bei denen der Dorn mehrfach nacheinander aneinander anliegende Kunststofflagen durchstößt, während der Lanzenschaft jeweils in den Durchbrechungen der bereits erzeugten Schweißverbindungen geführt wird.

Weiter wird vorgeschlagen, daß der Dorn und/oder gegebenenfalls der Lanzenschaft mit Mitteln zur vorübergehenden Vergrößerung und/oder Verkleinerung seines/ihres Außendurchmessers zumindest in Teilbereichen versehen ist/sind. Die Mittel zur Vergrößerung des Außendurchmessers können dazu genutzt werden, die Bildung des Schmelzewulstes zu fördern, indem das Material in schmelzflüssigem Zustand mittels der Durchmesservergrößerung des Dorns oder des Lanzenschaftes nach außen gedrängt wird. Sofern Mittel zur Verkleinerung des Außendurchmessers vorgesehen werden, können diese insbesondere dazu benutzt werden, das Zurückführen des Dorns und/oder der Lanze nach der Herstellung einer oder mehrerer Schweißverbindungen zu erleichtern. Zur Erzeugung dieser vorübergehenden Vergrößerung und/oder Verkleinerung des Außendurchmessers können der Dorn und/oder der Lanzenschaft z.B. mit einem schlauchartigen Mantel versehen sein, der von innen her mit einem Druckmedium zur Durchmesservergrößerung beaufschlagbar und zur Durchmesserverringerung entleerbar ist. Alternativ können expandierbare Elastomerkörper und/oder Federelemente verwendet werden.

Um die Verbindung des schmelzflüssigen Kunststoffes der beiden miteinander zu verbindenen Lagen im Bereich der Schweißverbindung zu fördern, ist zweckmäßig die Vorrichtung mit einer Einrichtung zur Erzeugung einer Schwingungsbewegung der zu verschweißenden Lagen relativ zueinander und/oder relativ zu dem Dorn versehen. Die Erzeugung der Schwingung kann beispielsweise auf mechanischem oder elektromagnetischem Wege erfolgen.

Um bedarfsweise eine besonders exakte Position der Schweißverbindungen zu gewährleisten, kann die Vorrichtung verstellbare Leitkörper für die Führung des Dorns und gegebenenfalls der Lanze bei deren Bewegung durch die zu verschweißenden Lagen hindurch aufweisen. Diese verstellbaren Leitkörper können beispielsweise stab- oder stangenförmig ausgebildet und quer zur Axialrichtung des Dorns und gegebenenfalls der Lanze zugeführt und entsprechend der Position der Schweißverbindung positioniert werden. An den den Schweißverbindungen benachbarten Stellen besitzen die Leitkörper zweckmäßig jeweils eine Durchbrechung, die so bemessen ist, daß der Dorn und gegebenenfalls der Lanzenschaft durch diese hindurchgeführt werden können.

Um eine Vielzahl von Schweißverbindungen in einem Arbeitsgang herstellen zu können, wird eine Ausführung der Vorrichtung vorgeschlagen, bei welcher diese eine relativ zu den zu verschweißenden Kunststofflagen bewegbare Halterungseinrichtung aufweist, an der mehrere Dorne oder Lanzen in vorgebbarer Anordnung halterbar und gemeinsam betätigbar sind. Außer für die gemeinsame Bewegung der Dorne oder Lanzen in deren Axialrichtung zur Erzeugung der Schweißverbindungen kann die Halterungseinrichtung auch zur Erzeugung einer gemeinsamen mechanischen Schwingung der Dorne oder Lanzen genutzt werden, indem die gesamte Anordnung aus der Halterungseinrichtung und den daran gehalterten Dornen oder Lanzen in Schwingung versetzt wird. Die Halterungseinrichtung ist bevorzugt rasterförmig mit Anbringungsstellen für Dorne oder Lanzen versehen, um letztere an der Halterungseinrichtung in der jeweils gewünschten und benötigten Anordnung und Verteilung anbringen zu können.

Da der Schweißvorgang, selbst wenn eine Vielzahl von Schweißverbindungen in einem Arbeitsgang hergestellt wird, nur wenig Zeit erfordert, wird vorgeschlagen, daß die Vorrichtung ein oder mehrere Magazine für die Aufnahme, Ausrichtung und Halterung sowie die Zu- und Abführung von die zu verschweißenden Lagen aufweisenden Kunststoffwerkstücken umfaßt. Diese Magazine können außerhalb des Vorrichtungsteils, in dem das Schweißen durchgeführt wird, befüllt und entleert werden, so daß die volle Kapazität der Vorrichtung hinsichtlich der damit pro Zeiteinheit durchführbaren Schweißungen ausgenutzt werden kann.

Weiterhin wird für die Vorrichtung vorgeschlagen, daß die Dorne oder Lanzen stetig oder schrittweise in ihrer Axialrichtung bewegbar sind. Hierdurch ist eine Anpassung der Art der Bewegung der Dorne oder Lanzen an die jeweiligen Bedingungen bei der Herstellung der Schweißverbindung möglich, insbesondere abhängig von Materialstärken und Art des zu verschweißenden Materials.

Ergänzend kann vorgesehen sein, daß neben der Bewegung in Axialrichtung eine überlagerte oder zwischengeschaltete Dreh- oder Schraubbewegung der Dorne oder Lanzen um ihre Axialrichtung erzeugbar ist. Hierdurch kann die Formung des Schmelzewulstes bei der Herstellung der Schweißverbindung günstig beeinflußt werden.

Eine weitere Ausführung der Vorrichtung nach der Erfindung ist dadurch gekennzeichnet, daß die Vorrichtung wenigstens einen Laser zur Erzeugung eines thermisch wirksamen Laserstrahls aufweist. Mit einem solchen Laser kann in einem einzigen Schritt sowohl das Erwärmen der Kunststofflagen auf deren Schmelztemperatur sowie die Erzeugung der Durchbrechung und die Ausbildung des Schmelzewulstes vorgenommen werden. Durch entsprechende Auswahl des Materials der Kunststofflagen kann dabei die Ausbildung des Schmelzewulstes allein durch die infolge von Oberflächenspannungen im schmelzflüssigen Zustand des Kunststoffes auftretende Krafteinwirkung erreicht werden, ohne daß mechanische Hilfsmittel eingesetzt werden müssen. Auch kann der bei einer schlagartigen Verdampfung eines Teils des Kunststoffmaterials im Bereich der Verschweißung auftretende Gasdruck für die Ausbildung und Formung des Schmelzewulstes genutzt werden. Alternativ kann bei Anwendung des Lasers das Erzeugen der Durchbrechung und die Formung des Schmelzewulstes auch mittels mechanischer Krafteinwirkung oder einer anderen Art von Krafteinwirkung erfolgen.

Um die Vorrichtung weitestgehend automatisch arbeiten zu lassen, besitzt diese zweckmäßig eine Steuereinrichtung, mittels welcher die Wärmequelle und die Mittel zur Bewegung des Dorns oder der Lanze oder der Dorne oder der Lanzen sowie gegebenenfalls die Beheizung des Dorns und/oder gegebenenfalls die Mittel durch Durchmesseränderung des Dorns oder der Lanze und/oder gegebenenfalls die Einrichtung zur Erzeugung der Schwingungsbewegung und/oder gegebenenfalls die verstellbaren Leitkörper und/oder gegebenenfalls die rasterförmige Halterungseinrichtung und/oder gegebenenfalls der Laser zentral betätigbar sowie steuer- und regelbar sind. Bevorzugt ist diese Steuereinrichtung ein Digitalrechner, der entsprechend dem jeweiligen Einsatzzweck der Vorrichtung programmierbar ist. Zusätzlich können gegebenenfalls vorgesehene Einrichtungen für die Zuführung, Positionierung, Halterung und Abführung der miteinander zu verbindenden bzw. fertigen Kunststoffteile damit gesteuert werden.

Das beschriebene Verfahren und die vorangehend erläuterte Vorrichtung eignen sich für die punktuelle Verschweißung praktisch beliebiger polymerer Folien, Platten, Bänder oder Formkörper mit weitestgehend beliebiger Struktur, aus schmelzbaren Kunststoffen. Voraussetzung für die Durchführbarkeit der Verschweißung ist lediglich, daß zumindest im Schweißbereich aneinander anliegende oder angenäherte Lagen des Kunststoffes vorliegen, wobei hier zwei oder auch mehr Lagen an einer Schweißstelle miteinander verschweißbar sind. Auch für flächige oder räumliche Gitterstrukturen aus den vorgenannten Materialien können das Verfahren und die Vorrichtung angewendet werden. Die hier beschriebene Verschweißung kann auch als provisorische Vorabverbindung eingesetzt werden, bevor eine endgültige Verbindung durch eine andere Verbindungsmethode, z.B. durch ein Tauchverfahren, erfolgt.

Über die bereits beschriebenen Vorteile hinaus bietet die erfindungsgemäße Vorrichtung die Möglichkeit, an einem Werkstück aus miteinander zu verbindenden Kunststofflagen Schweißverbindungen gleichzeitig oder nacheinander von verschiedenen Seiten aus und in unterschiedlichen Richtungen durchzuführen. Dies ermöglicht einen vielfältigen Einsatz der Vorrichtung und eine schnelle und kostengünstige Herstellung von Schweißverbindungen an unterschiedlichsten Werkstücken.

Im folgenden wird die Erfindung anhand einer Zeichnung erläutert. Die Figuren zeigen:
- Figur 1: zwei miteinander zu verschweißende Lagen aus Kunststoffolie,
- Figur 2: die beiden Lagen der Kunststoffolie aus Figur 1 in verschweißtem Zustand,
- Figur 3: eine Vorrichtung in ausschnittsweiser Darstellung, teils im Schnitt, zur Erzeugung einer Schweißverbindung gemäß Figur 2,
- Figur 4: die Vorrichtung aus Figur 3 im Querschnitt durch ihren unteren Teil,
- Figur 5: die Vorrichtung in einer Darstellung entsprechend Figur 4 in einer geänderten Ausführung,
- Figur 6a: die Vorrichtung in einer Darstellung entsprechend Figur 4 in einer weiteren geänderten Ausführung,
- Figur 6b: die Vorrichtung aus Figur 6a in einer Teil-Seitenansicht und
- Figur 7: die Vorrichtung in einer Ausführung für die Herstellung mehrerer neben- und hintereinanderliegender Schweißverbindungen in einem Arbeitsgang.

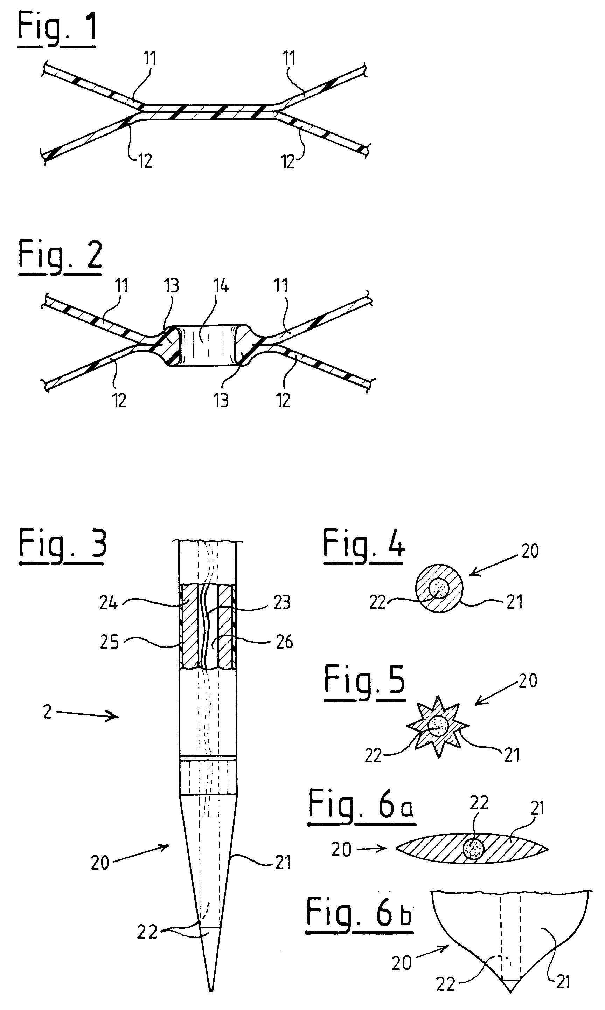

Figur 1 der Zeichnung zeigt zwei strukturierte, d.h. vorgeformte Lagen 11 und 12 aus Kunststoffolie, die über einen Teil ihrer Oberfläche aneinander anliegen. Dieser Bereich ist für eine Verschweißung der beiden Lagen 11, 12 vorgesehen. Die Verschweißung ist auch möglich bei einer nur aneinander angenäherten Position der Lagen 11, 12, wobei ein gewünschter Annäherungsabstand durch eine Feinstrukturierung wenigstens einer der Lagen 11, 12 oder durch andere bekannte Techniken definiert ereicht werden kann.

Zur Herstellung der Schweißverbindung zwischen den Lagen 11 und 12 werden zunächst diese beiden Lagen 11, 12 in dem Bereich, in dem sie aneinander anliegen, durch Wärmezufuhr bis zur Schmelztemperatur des Kunststoffes, aus dem die Lagen 11, 12 bestehen, erwärmt. In diesem Zustand wird durch Krafteinwirkung eine Durchbrechung der Lagen 11, 12 in dem erhitzten Bereich erzeugt, wodurch schmelzflüssiger Kunststoff verdrängt wird.

Figur 2 zeigt die beiden Lagen 11, 12 der Kunststoffolie nach Erzeugung der Schweißverbindung, wobei im Zentrum der Figur 2 die Durchbrechung 14 erkennbar ist. Diese Durchbrechung 14 ist umgeben von einem Schmelzewulst 13, der durch die Verdrängung des schmelzflüssigen Kunststoffes vom Zentrum nach außen hin entstanden ist. Im Bereich des Schmelzewulstes 13, der hier ringförmig umlaufend geformt ist, ist das Material der Lagen 11, 12 miteinander verschmolzen und damit praktisch einstückig. Somit wird eine sichere und feste punktuelle oder kleinflächige Schweißverbindung zwischen den beiden Lagen 11, 12 geschaffen.

Gemäß Figur 3 besteht eine für die Herstellung einer solchen Schweißverbindung geeignete Vorrichtung aus einer Lanze 2, die aus einem Lanzenschaft 24 und einem an dem freien Ende angebrachten Dorn 20 mit konischer Form besteht. Der Dorn 20 besitzt aufgrund seiner konischen Form eine Spitze 21. Im Inneren der Spitze 21 des Dorns 2 ist ein elektrisch betreibbares Heizelement 22 vorgesehen, das über eine elektrische Leitung 23 mit dem nötigen Heizstrom versorgbar ist. Zur Führung der elektrischen Leitung 23 ist im Inneren des Lanzenschaftes 24 ein in dessen Längsrichtung verlaufender Hohlraum 26 vorgesehen. Das Heizelement 22 steht unten aus dem Dorn 2 vor und bildet dessen äußere Spitze.

Um ein Anhaften von Kunststoff an dem Dorn 20 und dem Lanzenschaft 24 bei der Durchführung des Schweißvorganges zu vermeiden, sind der Dorn 20 und der Lanzenschaft 24 mit einer nichthaftenden Beschichtung 25 auf ihrer Oberfläche versehen.

Der Dorn 20 und der Lanzenschaft 24 sind miteinander verschraubt, um bedarfsweise eine Auswechslung des einen oder anderen Teils zu ermöglichen. Zwischen beiden ist zur thermischen Trennung ein schlecht wärmeleitendes Zwischenstück 27 eingefügt.

Zur Herstellung einer Schweißverbindung mit der Lanze 2 wird zunächst das Heizelement 22 aktiviert und die Lanze 2 wird soweit abgesenkt, daß sie in Berührung mit den Lagen 11, 12 der zu verschweißenden Kunststoffolien oder -platten oder -formteilen gelangt. Durch diesen Kontakt, bei dem schon ein erstes Einstechen erfolgen kann, wird den Lagen 11, 12 Wärme zugeführt, bis der Kunststoff in der Umgebung des Dorns 20 seine Schmelztemperatur erreicht. Durch eine weitere Bewegung der Lanze 2 in deren Axialrichtung durchstößt die Spitze 21 die Lagen 11, 12 gänzlich und verdrängt das schmelzflüssige Kunststoffmaterial von der Mitte radial zu den Seiten nach außen. Durch die konische Form der Spitze 21 des Dorns 20 läuft dieser Verdrängungsvorgang stetig ab, so daß ein verbindender Schmelzewulst 13, wie aus Figur 2 ersichtlich, erzeugt wird. Nach dem Durchstoßen der Lagen 11, 12 wird das Heizelement 22 im Dorn 20 wieder abgeschaltet und der Schmelzewulst 13 wird abgekühlt und härtet aus. Die Lanze 2 mit dem Dorn 20 kann dann entweder zurückgezogen werden oder weiter in Axialrichtung vorgeschoben werden, falls in Flucht mit der ersten Schweißverbindung eine oder mehrere weitere Schweißverbindungen herzustellen sind.

In einer Ausgestaltung der Spitze 21 des Dorns 20 besitzt diese einen kreisrunden Querschnitt, wie aus Figur 4 ersichtlich ist. Im Zentrum der Spitze 21 ist das Heizelement 22 erkennbar.

Die Ausführung der Spitze 21 des Dorns 20 gemäß Figur 5 unterscheidet sich durch die äußere Kontur der Spitze 21 von dem Beispiel gemäß Figur 4. Das Beispiel in Figur 5 besitzt im Querschnitt gesehen eine sternförmige Spitze 21, die für eine Vergrößerung der Umfangslänge und -fläche sorgt, wodurch der Wärmeübergang von der Spitze 21 in das Kunststoffmaterial der zu verschweißenden Lagen 11, 12 verbessert wird. Im Zentrum dieser Spitze 21 ist ebenfalls das im Querschnitt auch hier runde Heizelement 22 erkennbar. Das Heizelement kann beispielsweise ein selbstregelnder PTC-Widerstand sein.

Figur 6a der Zeichnung zeigt als dritte Ausführung der Spitze 21 des Dorns 20 eine solche mit einem flach-messerförmigen Querschnitt. Auch diese Querschnittsform verbindet eine große Umfangslänge mit einer kleinen Querschnittsfläche. Hiermit kann eine Schweißverbindung erzeugt werden, bei der die Durchbrechung relativ klein bleit, aber dennoch ein relativ langer Schmelzewulst und damit eine entsprechend hohe Festigkeit der Schweißverbindung erzielt werden kann.

Die in Figur 6b dargestellte Teil-Seitenansicht der Spitze 21 des Dorns 20 gemäß Figur 6a zeigt einen bevorzugten Verlauf der Spitzenkontur, welche insbesondere ein leichtes, nur geringe Vorschubkräfte erforderndes Eindringen und Durchstoßen der Spitze 21 des Dorns 20 durch die miteinander zu verschweißenden Lagen 11, 12 des Kunststoffes gewährleistet.

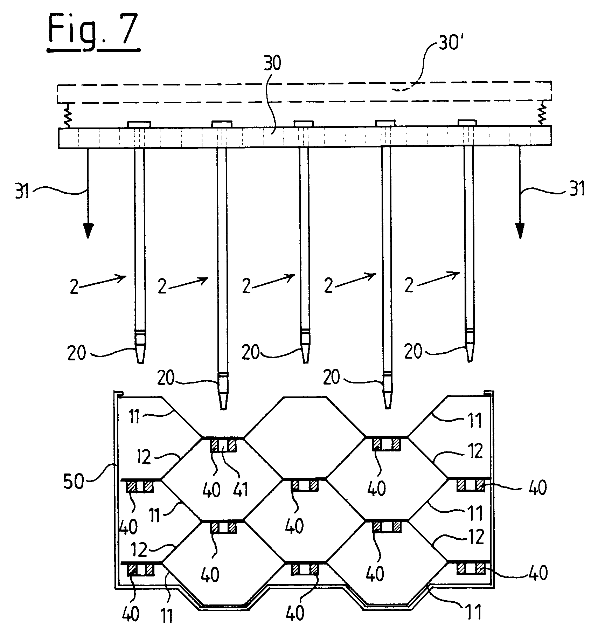

Figur 7 der Zeichnung zeigt in schematischer, vereinfachter Darstellung eine Ausführung der Vorrichtung, mit der in einem einzigen Arbeitsgang eine Vielzahl von Schweißverbindungen herstellbar ist. Die Vorrichtung besitzt dazu eine Halterungseinrichtung 30, die rasterförmig ausgeführt ist und an der mehrere Lanzen 2 mit jeweils einem beheizbaren Dorn 20 an der Spitze halterbar sind. Je nach der Form und Dimensionierung der zu verschweißenden Lagen 11, 12 können die Lanzen 2 in einer entsprechenden Anordnung an der Halterungseinrichtung 30 angebracht werden. Auch sind, wie die Figur 6 zeigt, unterschiedlich lange Lanzen 2 gemeinsam an der Halterungseinrichtung 30 halterbar und für die Schweißvorgänge einsetzbar.

Zur Durchführung der Schweißvorgänge ist die Halterungseinrichtung 30 in Axialrichtung der Lanzen 2 bewegbar geführt, so daß sich ein Absenkbewegung im Sinne der Bewegungspfeile 31 erzeugen läßt. Die Mittel für die Bewegung sind hier nicht im einzelnen dargestellt, da sie bekannt sind und dem Fachmann zur Verfügung stehen.

Unterhalb der Dorne 20 ist hier als Beispiel für ein aus einer Anzahl von Lagen 11, 12 aus Kunststoffolie herzustellendes Bauteil ein wabenförmiger Körper dargestellt. Dieser Körper besteht aus in diesem Beispiel insgesamt fünf Lagen 11, 12 aus gewellter Kunststoffolie, wobei jeweils ein Sohlenbereich der Lagen 11 an einem Scheitelbereich der Lagen 12 und jeweils ein Sohlenbereich der Lagen 12 an einem Scheitelbereich der Lagen 11 anliegt.

Vor der Durchführung der Schweißvorgänge werden die Lagen 11, 12 aus Kunststoffolie in der gewünschen Zahl und Anordnung in einem Magazin 50, das eine entsprechende Form und Größe aufweist, aufeinandergestapelt, ausgerichtet und in ihrer Lage arretiert. Bei labilen Gebilden, z.B. bei Verwendung von relativ dünnwandigen Lagen 11, 12, werden zusätzlich Führungskörper 40 eingesetzt, die einerseits der Führung der Lanzen 2 und andererseits zur Unterstützung der Lagen 11, 12 an den Schweißstellen dienen. Diese Führungskörper 40 besitzen eine langgestreckte Form und sind quer zur Axialrichtung der Lanzen 2, in der Figur 6 der Zeichnung senkrecht zur Zeichnungsebene, bewegbar. In ihrer Einsatzstellung sind die Führungskörper 40 so angeordnet, daß jeweils eine Durchbrechung 41 in dem Führungskörper 40 genau unterhalb des vorgesehenen Punktes für die jeweilige Schweißverbindung liegt. Beim Absenken der Halterungseinrichtung 30 mit den Lanzen 2 gelangen die Dorne 20 nach dem Durchstoßen der Lagen 11, 12 mit ihrer Spitze 21 in die Durchbrechungen 41 in den Führungskörpern 40 und werden so zentriert und geführt. Hierdurch erhalten alle Schweißverbindungen eine sehr exakte Positionierung. Zugleich werden Verschiebungen und Verwerfungen der einzelnen Lagen 11, 12 gegeneinander während des Schweißvorganges vermieden.

Wie erwähnt, wird die Halterungseinrichtung 30 mit den Lanzen 2 in Richtung der Bewegungspfeile 31 abgesenkt, bis auch die beiden unteren Lagen 11, 12 miteinander mittels der heißen Dorne 20 verschweißt sind. Nach Abkühlung der Schweißverbindungen werden die Lanzen 2 durch Anheben der Halterungseinrichtung 30 wieder zurückgezogen; ebenso werden die Führungskörper 40 zurückgezogen, so daß das nunmehr durch die Verschweißungen gebildete fertige Produkt unbehindert abgeführt und aus dem Magazin 50 entnommen werden kann. Während dieser Abführung und Entnahme kann bereits ein weiteres befülltes Magazin in die Schweißposition gebracht werden.

Der Absenkbewegung der Halterungseinrichtung 30 im Sinne der Bewegungspfeile 31 kann zusätzlich eine Schwingungsbewegung überlagert werden, die beispielsweise mittels eines Schwingmotors oder eines Schwingmagneten erzeugbar ist. Dazu kann die Halterungseinrichtung 30 elastischfedernd an einem zusätzlichen Halterahmen 30', der hier in gestrichelten Linien dargestellt ist, aufgehängt sein.

Die Durchschmelzung der einzelnen Lagen 11, 12 kann hierbei auch mittels Laserstrahlung von unten erfolgen, während die Schmelzewulstausbildung entweder allein durch Oberflächenspannung und Schwerkraft oder, wie beschrieben, durch mechanische Verdrängung oder auch durch eine Gasströmung, z.B. mittels Blasdüsen an den Lanzen, erfolgen kann.

## Patentansprüche

1. Verfahren zur Herstellung punktueller oder kleinflächiger Schweißverbindungen zwischen wenigstens zwei zumindest im Schweißbereich aneinander anliegenden oder angenäherten Lagen (11,12) thermoplastischer Kunststoffe, wobei die Lagen (11, 12) punktuell oder kleinflächig durch Wärmezufuhr auf die Schmelztemperatur des Kunststoffes erhitzt werden,
**dadurch gekennzeichnet,**
daß die Lagen (11, 12) in dem erhitzten Bereich durch Krafteinwirkung unter Ausbildung einer Durchbrechung (14) zu mindestens einem Schmelzewulst (13) umgeformt und abgekühlt werden.

2. Verfahren nach Anspruch 1, dadurch gekennzeichnet, daß die Krafteinwirkung mechanisch und/oder durch eine Oberflächenspannung des Kunststoffes und/oder durch Schwerkraft und/oder durch Fliehkraft und/oder durch Gasdruck und/oder durch eine Gasströmung aufgebracht wird.

3. Verfahren nach Anspruch 1 oder 2, dadurch gekennzeichnet, daß das Umformen der Lagen (11, 12) im erhitzten Bereich zu dem Schmelzewulst (13) durch Verdrängung von schmelzflüssigem Kunststoff vom Zentrum des erhitzten Bereiches nach außen hin erfolgt.

4. Verfahren nach einem der Ansprüche 1 bis 3, dadurch gekennzeichnet, daß der Schmelzewulst (13) geschlossen umlaufend geformt wird.

5. Verfahren nach einem der Ansprüche 1 bis 4, dadurch gekennzeichnet, daß zumindest eine der Lagen (11,12) während der Herstellung der Schweißverbindung zumindest im erhitzten Bereich in eine mechanische Schwingung versetzt wird.

6. Verfahren nach Anspruch 5, dadurch gekennzeichnet, daß die mechanische Schwingung eine Frequenz zwischen 10 und 100 Hz und eine Amplitude zwischen dem 0,1- und 10-fachen der Dicke einer der Lagen (11, 12), gegebenenfalls der dünnsten Lage (11, 12), aufweist.

7. Verfahren nach einem der Ansprüche 1 bis 6, dadurch gekennzeichnet, daß die Wärmezufuhr zu den Lagen (11, 12) mittels Wärmeleitung durch Kontakt mit einem wärmeabgebenden Körper und/oder mittels Beaufschlagung mit einer Ultraschallschwingung und/oder mittels Bestrahlung mit Wärmestrahlung erfolgt.

8. Verfahren nach einem der Ansprüche 1 bis 7, dadurch gekennzeichnet, daß wenigstens ein Laserstrahl für die Erwärmung der Lagen (11, 12) und die Erzeugung der Durchbrechung (14) verwendet wird.

9. Verfahren nach einem der Ansprüche 1 bis 8, dadurch gekennzeichnet, daß die Durchbrechung (14) nachträglich verschlossen wird.

10. Vorrichtung zur Herstellung punktueller oder kleinflächiger Schweißverbindungen zwischen wenigstens zwei zumindest im Schweißbereich aneinander anliegenden oder angenäherten Lagen (11, 12) thermoplastischer Kunststoffe, wobei die Vorrichtung wenigstens eine Wärmequelle aufweist, mit der die Lagen (11, 12) punktuell oder kleinflächig auf die Schmelztemperatur des Kunststoffes erhitzbar sind,
**dadurch gekennzeichnet,**
daß die Vorrichtung Mittel zur Umformung der Lagen (11, 12) in dem erhitzten Bereich durch Krafteinwirkung unter Ausbildung einer Durchbrechung (14) zu mindestens einem Schmelzewulst (13) aufweist.

11. Vorrichtung nach Anspruch 10, dadurch gekennzeichnet, daß sie wenigstens einen bewegbaren Dorn (20) aufweist, der durch den auf die Schmelztemperatur des Kunststoffes erhitzten Bereich der Lagen (11, 12) unter seitlicher Verdrängung von schmelzflüssigem Kunststoff hindurchstoßbar ist.

12. Vorrichtung nach Anspruch 11, dadurch gekennzeichnet, daß der Dorn (20) als Spitze einer Lanze (2) ausgebildet und am freien Ende eines Lanzenschaftes (24) angeordnet ist.

13. Vorrichtung nach Anspruch 11 oder 12, dadurch gekennzeichnet, daß der Dorn (20) zumindest an seiner Spitze ein Heizelement und/oder eine Wärmestrahlungsquelle und/oder einen Ultraschallschwinger aufweist.

14. Vorrichtung nach einem der Ansprüche 19 bis 13, dadurch gekennzeichnet, daß der Dorn (20) konisch ist.

15. Vorrichtung nach einem der Ansprüche 11 bis 14, dadurch gekennzeichnet, daß der Dorn (20) im Querschnitt drei- oder mehreckig oder oval oder rund oder kreuz- oder sternförmig oder flach-messerförmig ist.

16. Vorrichtung nach einem der Ansprüche 11 bis 15, dadurch gekennzeichnet, daß der Dorn (20) und gegebenenfalls die Lanze (2) aus einem nichthaftenden Material bestehen oder mit einer nichthaftenden Beschichtung (25) versehen sind.

17. Vorrichtung nach einem der Ansprüche 12 bis 16, dadurch gekennzeichnet, daß der maximale Durchmesser des Dorns (20) größer als der maximale Durchmesser oder gleich dem maximalen Durchmesser des Lanzenschaftes (24) ist.

18. Vorrichtung nach einem der Ansprüche 11 bis 17, dadurch gekennzeichnet, daß der Dorn (20) und/oder gegebenenfalls der Lanzenschaft (24) mit Mitteln zur vorübergehenden Vergrößerung und/oder Verkleinerung seines/ihres Außendurchmessers zumindest in Teilbereichen versehen ist/sind.

19. Vorrichtung nach einem der Ansprüche 10 bis 18, dadurch gekennzeichnet, daß diese mit einer Einrichtung zur Erzeugung einer Schwingungsbewegung der zu verschweißenden Lagen (11, 12) relativ zueinander und/oder relativ zu dem Dorn (20) versehen ist.

20. Vorrichtung nach einem der Ansprüche 11 bis 19, dadurch gekennzeichnet, daß diese verstellbare Leitkörper (40) für die Führung des Dorns (20) und gegebenenfalls der Lanze (2) bei deren Bewegung durch die zu verschweissenden Lagen (11, 12) hindurch aufweist.

21. Vorrichtung nach einem der Ansprüche 11 bis 20, dadurch gekennzeichnet, daß diese eine relativ zu den zu verschweißenden Kunststofflagen (11, 12) bewegbare Halterungseinrichtung (30) aufweist, an der mehrere Dorne (20) oder Lanzen (2) in vorgebbarer Anordnung halterbar und gemeinsam betätigbar sind.

22. Vorrichtung nach einem der Ansprüche 10 bis 21, dadurch gekennzeichnet, daß diese ein oder mehrere Magazine für die Aufnahme, Ausrichtung und Halterung sowie die Zu- und Abführung von die zu verschweißenden Lagen (11, 12) aufweisenden Kunststoffwerkstükken umfaßt.

23. Vorrichtung nach einem der Ansprüche 11 bis 22, dadurch gekennzeichnet, daß die Dorne (20) oder Lanzen 2) stetig oder schrittweise in ihrer Axialrichtung bewegbar sind.

24. Vorrichtung nach Anspruch 23, dadurch gekennzeichnet, daß neben der Bewegung in Axialrichtung eine überlagerte oder zwischengeschaltete Dreh- oder Schraubbewegung der Dorne (20) oder Lanzen (2) um ihre Axialrichtung erzeugbar ist.

25. Vorrichtung nach einem der Ansprüche 10 bis 24, dadurch gekennzeichnet, daß diese wenigstens einen Laser zur Erzeugung eines thermisch wirksamen Laserstrahls aufweist.

26. Vorrichtung nach einem der Ansprüche 10 bis 25, gekennzeichnet durch eine Steuereinrichtung, mittels welcher die Wärmequelle und die Mittel zur Bewegung des Dorns (20) oder der Lanze (2) oder der Dorne (20) oder der Lanzen (2) sowie gegebenenfalls die Beheizung des Dorns (20) und/oder gegebenenfalls die Mittel durch Durchmesseränderung des Dorns (20) oder der Lanze (2) und/oder gegebenenfalls die Einrichtung zur Erzeugung der Schwingungsbewegung und/oder gegebenenfalls die verstellbaren Leitkörper (40) und/oder gegebenenfalls die rasterförmige Halterungseinrichtung (30) und/oder gegebenenfalls der Laser zentral betätigbar sowie steuer- und regelbar sind.
